# EUROPEAN PATENT APPLICATION

(11) **EP 4 764 825 A1**
(43) Date of publication of application: **24.06.2026**
(21) Application number: 24853760.7
(22) Date of filing: 13.08.2024
(51) Int. Cl.: G06F 8/38

(54) **MEDIA CONTENT GENERATION METHOD AND DEVICE, STORAGE MEDIUM, AND PROGRAM PRODUCT**

(30) Priority: 14.08.2023 CN 202311022568
(71) Applicant: Beijing Zitiao Network Technology Co., Ltd., Beijing 100190 (CN)
(72) Inventor: MING, Chaoping, Beijing 100028 (CN); WEN, Wenwen, Beijing 100028 (CN)
(74) Representative: Marks & Clerk LLP
(86) International application number: PCT/CN2024/111675
(87) International publication number: WO 2025/036351

(57) **Abstract**

Embodiments of the present disclosure provide a media content generation method and device, a storage medium, and a program product. The method comprises: displaying dialogue content in a dialogue window of a first interface, the dialogue content being used for indicating a creation intention of a user for media content; generating target media content on the basis of the dialogue content; and presenting a trigger control for the target media content in the dialogue window, the trigger control being at least used for triggering presentation of the target media content. According to the media content generation method provided in the embodiments of the present disclosure, information interaction between a user and a system is implemented by means of a dialogue, and then target media content conforming to the creation intention of the user is generated on the basis of the obtained dialogue content, thereby reducing the learning cost of users, making the operation simple, and improving the intelligent level of media content generation.

## Description

The present application claims priority to Chinese Patent Application No. 202311022568.9, filed on August 14, 2023, which is incorporated herein by reference in its entirety as a part of the present application.

### TECHNICAL FIELD

Embodiments of the present disclosure relate to a media content generation method and device, a storage medium, and a program product.

### BACKGROUND

In existing media content software, functional controls are provided at fixed positions in a creation page. During the creation process, users need to familiarize themselves with the positions of these functional controls and master operation methods of these functional controls, resulting in complicated operations, high learning costs, and low intelligence levels, which are unfavorable for user operations.

### SUMMARY

Embodiments of the present disclosure provide a media content generation method and device, a storage medium, and a program product to simplify operations and improve the intelligence level during media content creation.

According to a first aspect, an embodiment of the present disclosure provides a media content generation method. The method includes:
displaying conversation content in a conversation window of a first interface, where the conversation content is used to indicate a user's creation intent for media content;
generating target media content based on the conversation content; and
showing a trigger control for the target media content in the conversation window, wherein the trigger control is at least configured to trigger showing of the target media content.

According to a second aspect, an embodiment of the present disclosure provides a media content generation device. The device includes:
a display module configured to display conversation content in a conversation window of a first interface, where the conversation content is used to indicate a user's creation intent for media content;
a generation module configured to generate target media content based on the conversation content; and
the display module further configured to show a trigger control for the target media content in the conversation window, where the trigger control is at least configured to trigger showing of the target media content.

According to a third aspect, an embodiment of the present disclosure provides an electronic device.
The electronic device includes: a processor and a memory, where
the memory has computer-executable instructions stored therein, and
the processor executes the computer-executable instructions stored in the memory, to cause the at least one processor to perform the media content generation method according to the first aspect and various possible designs of the first aspect.

According to a fourth aspect, an embodiment of the present disclosure provides a computer-readable storage medium. The computer-readable storage medium has computer-executable instructions stored therein that, when executed by a processor, cause the media content generation method according to the first aspect and various possible designs of the first aspect to be implemented.

According to a fifth aspect, an embodiment of the present disclosure provides a computer program product including a computer program that, when executed by a processor, causes the media content generation method according to the first aspect and various possible designs of the first aspect to be implemented.

### BRIEF DESCRIPTION OF DRAWINGS

In order to describe the technical solutions in embodiments of the present disclosure or in the related art more clearly, the accompanying drawings for describing the embodiments or the related art are briefly described below. Apparently, the accompanying drawings in the following description are some embodiments of the present disclosure, and those of ordinary skill in the art may still derive other accompanying drawings from these accompanying drawings without creative efforts.
FIG. 1 is a schematic flowchart of a media content generation method according to an embodiment of the present disclosure;
FIGs. 2a to 2b are schematic diagrams of an interface of conversation content of an intelligent video editing function according to an embodiment of the present disclosure;
FIGs. 3a to 3d are schematic diagrams of an interface of conversation content of a text-to-video function according to an embodiment of the present disclosure;
FIGs. 4a to 4d are schematic diagrams of an interface of conversation content of an image generation function according to an embodiment of the present disclosure;
FIG. 5 is a schematic diagram of an interface of an entry control of a first interface according to an embodiment of the present disclosure;
FIG. 6 is a structural block diagram of a media content generation apparatus according to an embodiment of the present disclosure; and
FIG. 7 is a schematic diagram of hardware structure of a media content generation device according to an embodiment of the present disclosure.

### DETAILED DESCRIPTION

In order to make the objectives, technical solutions, and advantages of embodiments of the present disclosure clearer, the technical solutions in the embodiments of the present disclosure are described clearly and completely below with reference to the accompanying drawings in the embodiments of the present disclosure. Apparently, the embodiments described are some rather than all of the embodiments of the present disclosure. All other embodiments obtained by those of ordinary skill in the art based on the embodiments of the present disclosure without any creative effort shall fall within the scope of protection of the present disclosure.

In view of the above-mentioned problems of high operation difficulty and low intelligence level in existing media content generation methods, the inventors of the present disclosure have found through research that a human-machine conversation mode may be employed to determine a user's creation intent, thereby generating target media content for the user that meets the user's creation intent. Based on this, an embodiment of the present disclosure provides a media content generation method.

The media content generation method according to the present disclosure may be implemented by an electronic device, or an application (APP) in an electronic device, a web page, or the like. The electronic device may include a mobile phone, a tablet computer, a wearable electronic device, a vehicle-mounted device, an augmented reality (AR) device/a virtual reality (VR) device, a notebook computer, an ultra-mobile personal computer (UMPC), a netbook, a personal digital assistant (PDA), a smart television, a smart screen, a high-definition television, a 4K television, a smart speaker, a smart projector or another smart home device. The embodiments of the present disclosure do not impose any limitation on the specific type of the electronic device. The embodiments of the present disclosure do not limit the type of an operating system of the electronic device, such as Android system, Linux system, Windows system, and iOS system.

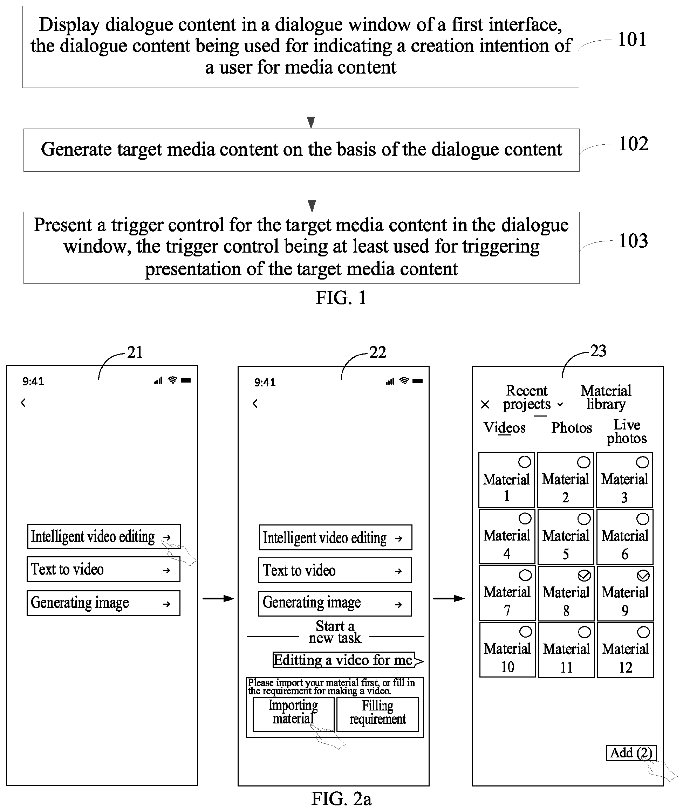

Referring to FIG. 1, FIG. 1 is a schematic flowchart of a media content generation method according to an embodiment of the present disclosure. The media content generation method includes the following steps.

101. Displaying conversation content in a conversation window of a first interface, where the conversation content is used to indicate a creation intent of a user for media content.

Specifically, the conversation content may include user conversation information from the user and may further include system conversation information from a system. The conversation information may include text, numbers, symbols, links, emojis, images, audio, video clips, and other types of data, which are not limited. Display parameters, such as size, color, display position, and display transparency, of the conversation window are not limited.

There may be a plurality of ways to input the user conversation information.

In a feasible implementation, in order to facilitate guidance for a user with less experience in creation, an operation control may be displayed within the first interface, so that the user triggers the operation control to express a creation intent. Specifically, the conversation content may include first user conversation information. The method may further include: displaying a target functional control within the first interface; and generating, in response to a touch operation acting on the target functional control, the first user conversation information corresponding to the target functional control.

Here, the target functional control may be a control provided for a content type of the media content, such as "generating image", "generating image-text", and "generating video". The target functional control may also be a control configured to guide the user to input reference information for generating target media content, such as "importing material", "inputting copy requirement", and "inputting video requirement". This is not limited in the embodiments of the present disclosure. The target functional control may be presented in the form of an icon, text, a symbol, an image, and the like, or may further be presented in a combination of a plurality of forms.

In another feasible implementation, in order to improve the flexibility of the user to input the user conversation information, an input area may be provided in the first interface, so that the user inputs the user conversation information in the input area. Specifically, the conversation content may include second user conversation information, and the first interface may include a conversation input area. The method may further include: obtaining the second user conversation information in response to an input operation acting on the conversation input area. Here, the embodiments of the present disclosure do not limit display parameters, such as size, color, display position, and display transparency, of the input area.

In yet another feasible implementation, in order to broaden the user's creative ideas, creation suggestion information may be shown in the conversation window of the first interface, so that the user inputs the user conversation information based on the creation suggestion information. The creation suggestion information may be highly popular creative styles, creative themes, and other information obtained based on big data analysis.

It should be noted that the above-mentioned various methods for inputting user conversation information may be implemented separately or in any combination, and the embodiments of the present disclosure are not limited thereto.

Conversation information from different objects in the conversation content may be provided on the same side or may be provided on different sides. For example, the user conversation information from the user may be provided on the right side of the conversation window and right-aligned. The system conversation information from the system may be provided on the left side of the conversation window and left-aligned. The conversation information of the both parties may also be right-aligned or left-aligned, which is not limited in the embodiments of the present disclosure.

102. Generating target media content based on the conversation content.

Specifically, after the conversation content is obtained, identification processing on the creation intent of the conversational content is performed, and the target media content may be generated based on the creation intent. Here, the above-mentioned identification processing may be performing natural language processing on the conversation content to obtain a plurality of labels representing a creation intent and determining a material and a material editing manner based on the plurality of labels, so as to obtain the target media content. The target media content may be a video, an image-text, an image, or another type of data.

For example, the user may input user conversation information "Creating a happy birthday-themed video for me". Based on the conversation information, the system may find a video draft template (including editing information, that is, edit operations performed on materials to be imported) related to the happy birthday-theme, and the user may import his/her own video material into the video draft template to complete the creation of the target video.

103. Displaying a trigger control for the target media content in the conversation window, where the trigger control is at least configured to trigger displaying of the target media content.

Specifically, after the target media content is generated, a trigger control may be provided to facilitate viewing an editing effect of the target media content, so that the target media content may be played or enlarged and displayed after the user performs a trigger operation on the trigger control. If the user is satisfied with the editing effect of the target media content, the user may perform operations, such as exporting and sharing, on the target media content. If the user is not satisfied with the editing effect of the target media content, the user may input conversation information in the conversation window for regenerating media content or continuing to improve the target media content.

In some embodiments, in order to facilitate editing of the target media content in the case where the user is not satisfied with the editing effect of the target media content, an edit control may be provided in the first interface so that the user may enter an editing interface after triggering the edit control. For example, in a feasible implementation, the editing interface may be provided with a plurality of edit functional controls, so that a corresponding edit operation may be performed on the target media content after the user triggers a relevant edit functional control. In another feasible implementation, the editing interface may include an editing conversation window. An editing intent of the user may be determined by obtaining the conversation content in the editing conversation window, thereby allowing the editing of the target media content based on the editing intent to obtain new target media content.

It can be learned from the above description that, according to the media content generation method provided in the present disclosure, a conversation mode is employed to achieve information interaction between the user and the system, thereby generating the target media content that meets the user's creation intent based on the obtained conversation content, which reduces the learning cost of the user, makes the operation simple, and improves the intelligent level of media content generation.

In an embodiment of the present disclosure, on the basis of the above-mentioned embodiment of FIG. 1, the target media content may be a video draft. The video draft includes a video material and editing information. The editing information is used to indicate an edit operation performed on the video material.

There are a plurality of ways to generate the video draft.

In a feasible implementation, the video draft may be a "pure image video draft" that includes only image materials, video materials, and does not include any copy. For the generation of such a video draft, generating the target media content based on the conversation content may include: obtaining first requirement information input by the user based on the conversation content, where the first requirement information is used to indicate a content requirement for the media content; determining a plurality of candidate video drafts based on the first requirement information, where each of the candidate video drafts includes a video draft template and a target material, and the video draft template includes an edit operation performed on the target material; and selecting a video draft from the plurality of candidate video drafts.

Specifically, the first requirement information may be data of types such as text, video, image, and audio. The first requirement information may include requirements for contents such as the style, theme, time, location, and event of the media content.

For example, the first requirement information may only include expression information of requirements (for example, requirements shown in the form of text, audio, or video), or may only include a video material imported by the user, or may also include both the expression information of requirements and a video material imported by the user, which is not limited in the embodiments of the present disclosure.

Correspondingly, if the first requirement information only includes expression information of requirements, for example, a text requirement, a plurality of candidate video drafts may be determined based on the text requirement. Each of the candidate video drafts includes a video draft template determined based on the text requirement and an original material (for example, which may be selected from a material library). Different candidate video drafts may have different video draft templates or original materials to allow the user to select a target video draft from the plurality of candidate video drafts as the target media content.

If the first requirement information only includes the video material, a plurality of video draft templates may be matched based on the video material, and then the video material may be imported into the plurality of video draft templates to obtain a plurality of candidate video drafts. Then, a video draft is selected from the plurality of candidate video drafts as the target media content.

If the first requirement information includes both the text requirement and the video material imported by the user, a plurality of video draft templates may be obtained by performing matching based on the text requirement and the video material, and then the video material may be respectively imported into the plurality of video draft templates to obtain a plurality of candidate video drafts. Then, a video draft is selected from the plurality of candidate video drafts as the target media content.

Further, in order to facilitate obtaining the user's requirement information for the above-mentioned "pure image video draft", the conversation content in the conversation window may include a control that is provided by the system and configured to be used for inputting the first requirement information, so as to obtain the user's requirement information in response to a trigger operation of the user on the control. Specifically, the first requirement information may include a first text requirement and/or a first video material selected by the user. Displaying the conversation content in the conversation window of the first interface may include: displaying first system conversation information in the conversation window of the first interface, where the first system conversation information displays a material import control and/or a first input box, the material import control is configured to obtain the first video material selected by the user, and the first input box is configured to obtain the first text requirement input by the user.

For example, the material import control and the first input box may be displayed simultaneously in the conversation window and may also be displayed in a certain sequence. For example, the first input box is displayed after the user completes a touch operation on the material import control. In addition, for ease of operation, a skip control may be provided in both the material import control and the first input box to facilitate the user to cancel a touch operation performed on a corresponding control. For example, the material import control includes a skip control, a touch operation on the skip control is received. In response to the touch operation, the input content corresponding to the material import control may not need to be obtained, the material import control is skipped, and a touch operation performed on another control, such as the input box, is received to obtain content input in the input box.

Further, in the process of the user importing a material, for ease of operation, displaying the conversation content in the conversation window of the first interface may further include: when the first system conversation information displays the material import control, displaying a material selection interface in the conversation window in response to an action on the material import control; and obtaining, in response to a selection instruction of the user in the material selection interface, the first video material selected by the user.

Specifically, the material selection interface may be displayed on an upper layer of the first interface or embedded in the first interface, and this embodiment does not limit the display mode, size, and transparency setting of the material selection interface.

Further, after the user selects and imports the materials in the material interface, in order to further select and reject the imported material, obtaining the first video material selected by the user may include: obtaining a second video material selected by the user; displaying a slot to be filled and a filled slot filled with the second video material in the conversation window, where the slot to be filled is configured tobe filled with a video material subsequently selected by the user in response to being triggered, and a new filled slot is formed and displayed; and obtaining the first video material selected by the user based on the video material filled in the filled slot.

Specifically, a plurality of slots to be filled may be provided, or only one slot to be filled may be provided. When one slot to be filled is provided, after the slot to be filled is filled with a new material to form a filled slot, other slot to be filled is displayed, so that the user may continue to add materials.

Optionally, the filled slot includes a delete control configured to delete the filled slot corresponding to the delete control in response to being triggered.

An exemplary description of the generation process of the "pure image video draft" is given below with reference to FIGs. 2a to 2b.

After an application is launched, a user interface 21 shown in FIG. 2a may be displayed on a mobile phone, where the user interface 21 is a conversation page (that is, the first interface), and the conversation page is mainly configured to display and obtain the conversation content between the user and the system.

Referring to FIG. 2a, the user interface 21 includes a conversation window, and the conversation window displays functional controls such as intelligent video editing, text to video, and generate image. The application receives a trigger operation (such as a click operation or a touch-and-hold operation) performed on the "intelligent video editing" control, and in response to the trigger operation on the "intelligent video editing" control, user conversation information "Editing a video for me" is displayed in the conversation window of a user interface 22. Based on the user conversation information, system conversation information continues to be displayed in the conversation window. The system conversation information includes operation controls such as "importing material" and "filling requirement", and corresponding operation prompt information ("Please import your material first, or fill in the requirement for making a video"). The "importing material" control is configured to, in response to being triggered, jump to a material import page to receive a material selection instruction, and the "filling requirement" control is configured to, in response to being triggered, display an input box for inputting requirement information for the target media content. For example, as shown in the user interface 22 of the figure, the application receives a trigger operation (such as a click operation or a touch-and-hold operation) performed on the "import material" operation control, and jumps to the material import page in response to the trigger operation performed on the "import material" operation control by the user. A user interface 23 is the material import page, and the user interface 23 includes primary directories such as recent projects and material library. Under the recent projects, there are secondary directories such as videos, photos, and live photos displayed. After a video is selected, a plurality of video materials such as a material 1 to a material 12 are displayed. The user interface 23 further includes an add control configured to, in response to being triggered, add the material selected by the user on the page, that is, a confirm control for the currently selected material. As shown in the user interface 23, the add control may include a text "add" and a quantity of added materials "2". After the user selects a material 8 and a material 9, the application jumps to a conversation interface, that is, the first interface, in response to a trigger operation performed on the add control by the user.

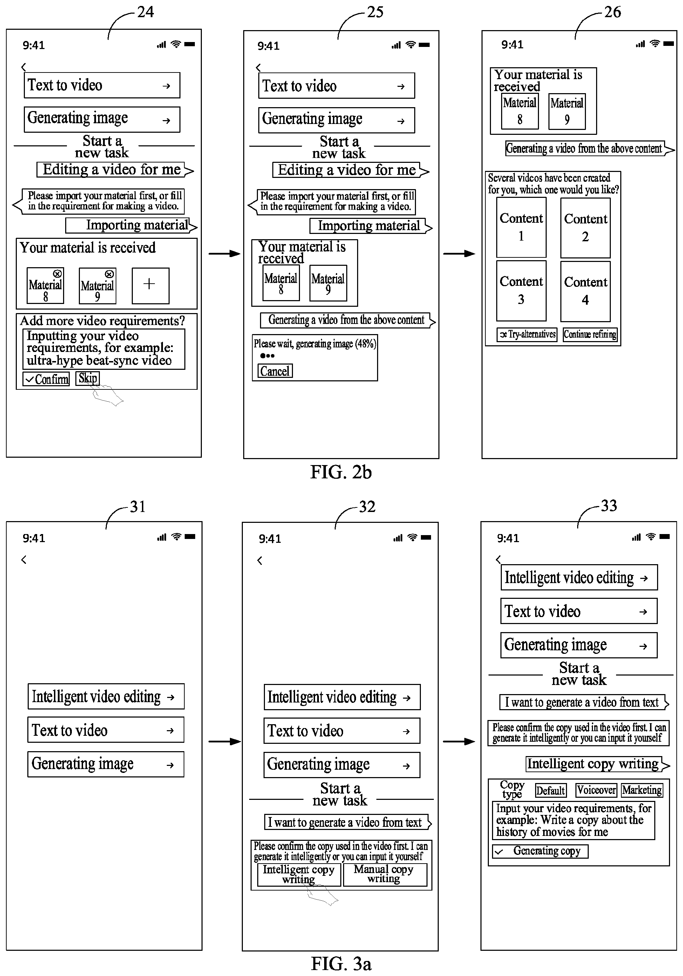

Referring to FIG. 2b, in a user interface 24, user conversation information "Importing a material" and system conversation information "Your material is received" are displayed, and a plurality of slots are also displayed, where a filled slot 201 is filled with the selected material 8 and material 9. A slot to be filled 202 is configured to add a new material in response to being triggered (for example, after the slot to be filled is triggered, the material import page as shown in the user interface 23 of FIG. 2a may be displayed to add a new material). The filled slot 201 may be provided with a delete control 2011 to allow the application, after receiving a trigger operation performed on the delete control 2011, to delete the corresponding material or the filled slot in response to the trigger operation. In addition, as shown in the user interface 24, the system conversation information may further include an input box 203 for inputting a text requirement. A confirm control and a skip control are displayed in the input box 203. The confirm control is configured to, after a text requirement is input in the text input box, indicate confirmation of the input content. The skip control is configured to indicate that the input operation is skipped, that no text input is made, and that subsequent steps are performed only for the received materials. A trigger operation performed on the skip control by the user is received, and in response to the trigger operation, user conversation information "Generating a video using the above content" and a system conversation message are displayed in a user interface 25. The system conversation message includes progress information and a cancel control that is configured to cancel the current generation in response to being triggered. After the progress is completed, a system conversation message is displayed in a user interface 26. The system conversation message includes a plurality of candidate video draft contents 1 to 4 to allow the user to select the target media content therefrom. The system conversation message further includes a "try-alternatives" operation control and a "continue refining" operation control. The "try-alternatives" operation control is configured to regenerate a plurality of candidate video drafts based on the previous conversation content. The "continue refining" operation control is configured to continue to input a conversation message, add conversation content, and then generate, based on the added conversation content, a plurality of candidate video drafts for the user to select from.

It should be noted that the embodiments shown in FIGs. 2a to 2b are only examples of the media content generation method according to the embodiments of the present disclosure. In practical scenarios, the display mode and the form of displaying the conversation content, the setting mode of related controls, as well as the layout of some pages, display parameters, and the implementations of controls and entries may be flexibly set according to requirements.

In another feasible implementation, the video draft may include a copy. For example, The video draft is generated based on the copy. Accordingly, for an "image-text type video draft" including a copy, generating the target media content based on the conversation content may include: determining a target copy based on the conversation content; segmenting the target copy into a plurality of copy statements; determining, for each copy statement, a video material and an audio clip corresponding to the copy statement, where the video material is obtained based on semantic matching of the copy statement; and the audio clip is obtained by converting the copy statement based on text-to-speech technology; and generating the video draft based on video materials and audio clips respectively corresponding to the plurality of copy statements, where the video materials and the audio clips are all independently editable.

Specifically, in the video draft, the three parts, namely, the video materials, audio clips, and the copy statements may be in a merged state, an independent state,, or different combined states. For example, the audio clips and the copy statements may be merged together.

The target copy may be obtained in a variety of ways. The user may input the target copy directly in the conversation window in a conversation manner, or the user may first input a copy requirement for the target copy in the conversation window in a conversation manner, and then the system may intelligently generate the target copy for the user based on the copy requirement.

Optionally, in order to help the user to obtain the copy faster, the user may be provided with an intelligent copy writing service to guide the user to input requirement information for the style and content of the copy, and the like, and then based on the requirement information, a target copy that meets the user's requirements is generated. Based on this, determining the target copy based on the conversation content may include: determining second requirement information based on the conversation content, and determining the target copy based on the second requirement information, where the second requirement information is used to indicate a content requirement for the copy.

Here, the second requirement information may include requirements for the style, purpose, structure, literary form and other aspects of the copy. In order to facilitate broadening of the user's ideas, some requirements may be provided to the user in the conversation window in the form of a selection control, for the user to trigger and select.

Accordingly, in order to facilitate the user to input the requirement information for the copy, an input box may be displayed in the conversation window. Further, in order to facilitate editing of the generated target copy, an edit control and a switch control may be provided. Displaying the conversation content in the conversation window of the first interface may include: displaying second system conversation information in the conversation window of the first interface, where the second system conversation information displays a second input box, and the second input box displays a first copy generated based on the second requirement information; editing the first copy to obtain a second copy in response to an action on an edit control of the second input box; or, switching the first copy to obtain a third copy in response to an action on a switch control of the second input box.

An exemplary description of the generation process of the "image-text-based video draft" is given below with reference to FIGs. 3a to 3d.

After an application is launched, a user interface 31 shown in FIG. 3a may be displayed on a mobile phone, where the user interface 31 is a conversation page (that is, the first interface), and the conversation page is mainly configured to display and obtain the conversation content between the user and the system.

Referring to FIG. 3a, the user interface 31 includes a conversation window in which functional controls such as "intelligent video editing", "text to video", and "generating image" are displayed. The application receives a trigger operation (such as a click operation or a touch-and-hold operation) performed on the "text to video" control, and in response to the trigger operation on the "text to video" control, user conversation information "I want to generate a video from text" is displayed in the conversation window of a user interface 32. Based on the user conversation information, system conversation information continues to be displayed in the conversation window. The system conversation information includes operation controls such as "intelligent copy writing" and "manual copy writing", as well as corresponding operation prompt information "Please confirm the copy used in the video first. I can generate it intelligently or you can input it yourself". The application receives a trigger operation (such as a click operation or a touch-and-hold operation) performed on the "intelligent copy writing" operation control, and in response to the trigger operation on the "intelligent copy writing" operation control by the user, a user interface 33 displays user conversation information "Intelligent copy writing" and continues to display system conversation information. The system conversation information includes a text input box and a copy type selection control (default, voiceover, marketing, and the like). The text input box is used to input a copy requirement. The copy type selection control is configured to determine a corresponding copy type in response to being triggered.

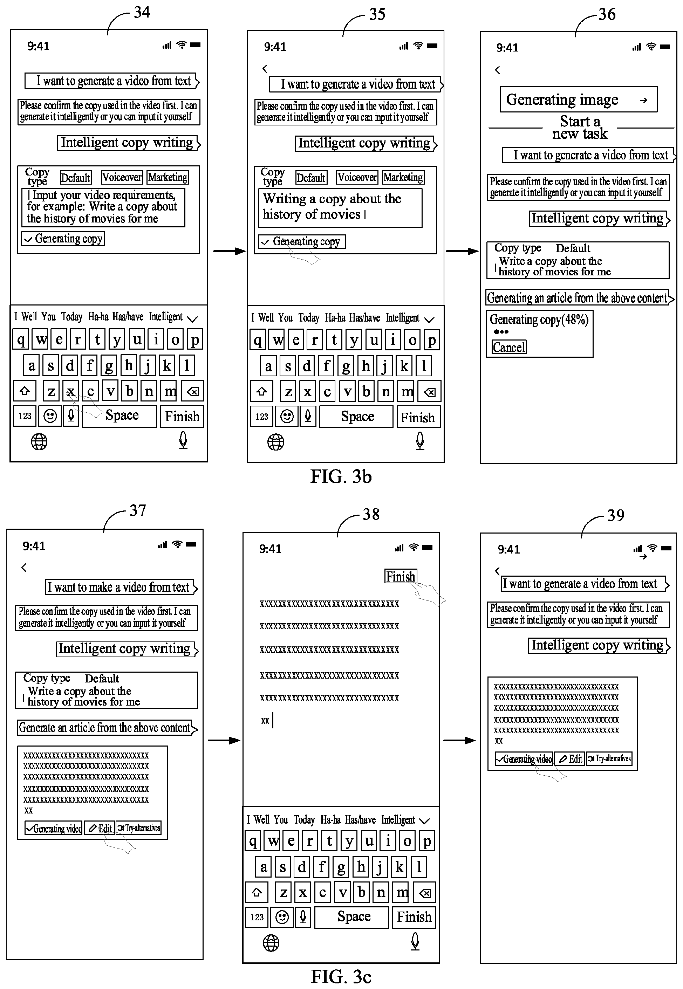

Referring to FIG. 3b, after the text input box is triggered, a keyboard control is invoked to input text information (for example, "Writing a copy about the history of movies") through the keyboard control. As shown in user interface 35,for a trigger operation (such as a click operation or a touch-and-hold operation) performed on a "generating copy" control, in response to the trigger operation performed on the "generating copy" operation control by the user, system conversation information is displayed in a user interface 36. The system conversation information includes material content for generating a copy, and then user conversation information "Generating an article from the above content" continues to be displayed, and system conversation information continues to be displayed, where the system conversation information includes progress information for copy generation (for example, 48%) and a cancel control that is configured to cancel copy generation.

Referring to FIG. 3c, a user interface 37 continues to display system conversation information that includes a text input box. The text input box displays a target copy generated based on the copy requirement. The system conversation information further includes an "edit" control, a "try-alternatives" control, and a "generating video" control. The "edit" control is configured to, in response to being triggered, edit the target copy in the text input box. The "try-alternatives" control is configured to, in response to being triggered, regenerate a new target copy based on the copy requirement. The "generating video" control is configured to generate the target media content based on the target copy currently displayed in the text input box. A trigger operation (such as a click operation or a touch-and-hold operation) performed on the "edit" control is received, and in response to the trigger operation on the "edit" control, the application jumps to a user interface 38, that is, a text editing interface. The user interface 38 includes a target copy to be edited, a keyboard control, and a "finish" control. The keyboard control is configured to, in response to being triggered, edit the target copy. The "finish" control is configured to, in response to being triggered, close the current interface and jump to the conversation interface. A trigger operation (such as a click operation or a touch-and-hold operation) performed on the "finish" control is received, and in response to the trigger operation on the "finish" control, the system conversation information as shown in the interface 37 continues to be displayed in the conversation window of a user interface 39, which is not repeated herein. A trigger operation (such as a click operation or a touch-and-hold operation) performed on the "generating video" control is received, and in response to the trigger operation on the "generating video" control, system conversation information (not shown) may continue to be displayed in the conversation window. The system conversation information may include an intelligent material matching control and a material manual-importing control. The intelligent material matching control is configured to, in response to being triggered, obtain corresponding image material from the material library by performing matching based on the target copy. The material manual-importing control is configured to, in response to being triggered, jump to the material import page to import the material selected by the user on the interface.

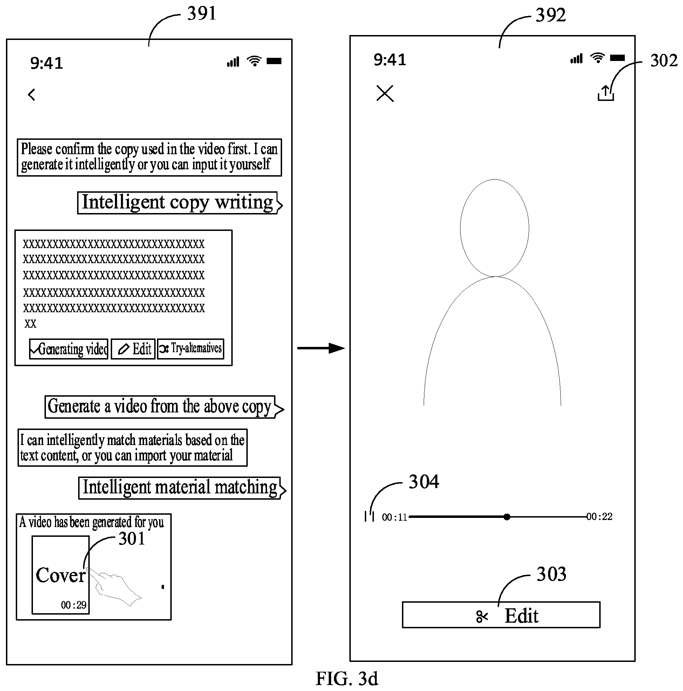

Referring to FIG. 3d, a trigger operation (such as a click operation or a touch-and-hold operation) performed on the intelligent material matching control is received, and in response to the trigger operation on the intelligent material matching control, a user interface 391 displays user conversation information "Intelligent material matching", continues to display system conversation information, where the system conversation information includes a trigger control 301 of an "image-text type video draft" generated based on the target copy and the intelligently matched material. As shown in the user interface 391, the trigger control may be a cover video frame of the video draft. A trigger operation (such as a click operation or a touch-and-hold operation) performed on the cover video frame is received, and in response to the trigger operation on the cover video frame, the application jumps to a preview page, that is, a user interface 392. The user interface 392 includes an export control 302, an edit control 303, and a playback control 304. The export control 302 is configured to, in response to being triggered, generate a video segment based on the current video draft and export or share the video segment. The edit control 303 is configured to, in response to being triggered, jump to an editing page to perform editing on the video draft. The playback control 304 is configured to, in response to being triggered, render and display editing effect frame images of the video draft.

In the case where the target media content is a video draft, there are various ways to display the video draft after it is generated. In an embodiment of the present disclosure, in order to facilitate the user's further operation (such as previewing, editing, or exporting) on the video draft, the trigger control that is configured to show the video draft may be provided in the form of a video cover. Then, the application jumps to the preview interface in response to the trigger control being triggered for an operation such as previewing, editing, or exporting. Specifically, displaying the trigger control of the target media content in the conversation window may include: obtaining a preview frame image at a target timeline position in the video draft and determining the preview frame image as a video cover; and displaying the video cover in the conversation window, where the video cover is used to displaying an editing effect of the video draft in response to being triggered.

Specifically, the preview frame image selected as the video cover may be a preview frame image corresponding to the first position among the timeline positions of the video draft, or may be a preview frame image in the video draft that best reflects the theme of the video draft, which is not limited in the embodiments of the present disclosure.

Optionally, after showing the trigger controls of the target media content in the conversation window, the method may further include: jumping, in response to a touch operation acting on the trigger control, to a preview playback interface, sequentially rendering editing effect frame images of the video draft, and displaying the rendered editing effect frame images on the preview playback interface.

For example,To save memory, a frame played in the preview playback interface may be a frame that is obtained by real-time rendering, rather than a frame that is played after compositing the video drafts into a video segment and playing the video segment.

Optionally, the trigger control includes an export control. After displaying the trigger control of the target media content in the conversation window, the method may further include: generating, in response to a touch operation acting on the export control, a target video based on the video draft.

For example, reference may be made to the embodiments of the user interface 391 and the user interface 392 shown in FIG. 3d, which is not repeated herein.

It should be noted that the embodiments shown in FIGs. 3a to 3d are only examples of the media content generation method according to the embodiments of the present disclosure. In practical scenarios, the display mode and the form of displaying the conversation content, the setting mode of related controls, as well as the layout of some pages, display parameters, and the implementations of controls and entries may be flexibly set according to requirements.

In an embodiment of the present disclosure, on the basis of the above-described embodiment of FIG. 1, the target media content may be an image, and requirement information (a text requirement, a reference image, a requirement shown in video or audio form, or the like) given by the user for generating the image may be determined based on the conversation content. Specifically, generating the target media content based on the conversation content may include: determining third requirement information based on the conversation content, where the third requirement information includes a second text requirement and/or a reference image, and the second text requirement is used to indicate a content requirement for the media content; and determining a target image based on the third requirement information, and determining the target image as the target media content.

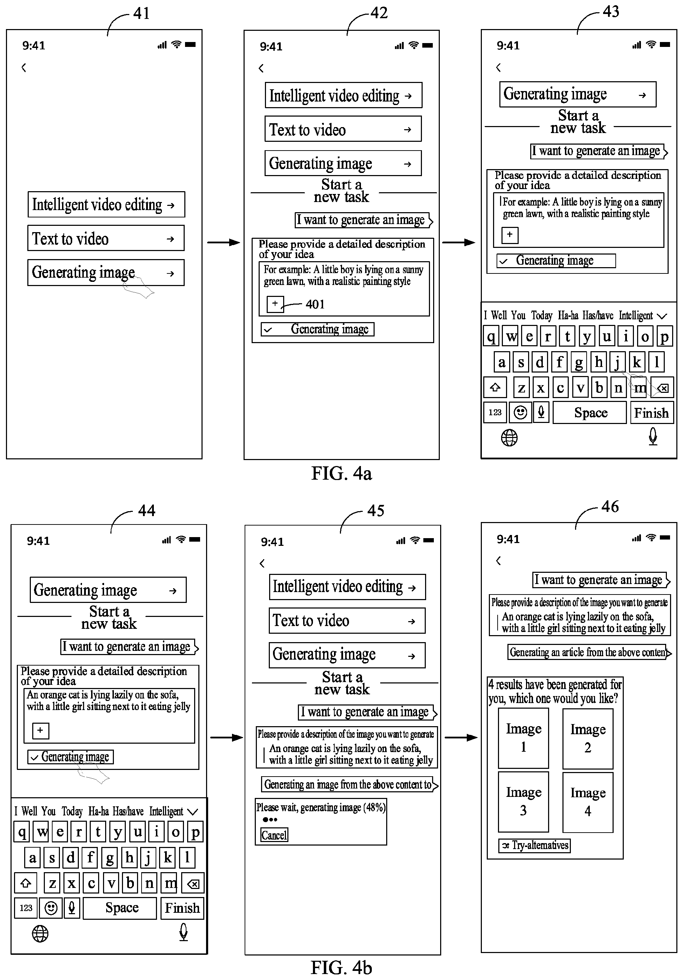

An exemplary description of the generation process of the target image is given below with reference to FIGs. 4a to 4d.

After an application is launched, a user interface 41 shown in FIG. 4a may be displayed on a mobile phone, where the user interface 41 is a conversation page (that is, the first interface), and the conversation page is mainly configured to display and obtain the conversation content between the user and the system.

Referring to FIG. 4a, the user interface 41 includes a conversation window, and the conversation window displays functional controls such as intelligent video editing, text to video, and generating image. The application receives a trigger operation (such as a click operation or a touch-and-hold operation) performed on the "generating image" control, and in response to the trigger operation on the "generating image" control, user conversation information "I want to generate an image" is displayed in the conversation window of a user interface 42. Based on the user conversation information, system conversation information continues to be displayed in the conversation window. The system conversation information includes operation controls, such as an input box, an add control 401, a generating image control and so on, and corresponding operation prompt information "Please provide a detailed description of your idea". The application receives a trigger operation (such as clicking on a blank space in the input box to determine a cursor position) performed on the input box, and in response to the trigger operation on the input box by the user, as shown in a user interface 43, a keyboard control is invoked to input requirement information for the image (the second text requirement).

Referring to FIG. 4b, the application receives a trigger operation performed on the keyboard control, and in response to the trigger operation on the keyboard control, input text information (for example, "An orange cat is lying lazily on the sofa, with a little girl sitting next to it eating jelly") is displayed in an input box shown in a user interface 44. The application receives a trigger operation (such as a click operation or a touch-and-hold operation) performed on the "generating image" control, and in response to the trigger operation on the "generating image" control, a user interface 45 displays user conversation information "Generating an image using the above content" and continues to display system conversation information, where the system conversation information includes progress information for image generation (for example, Please wait, generating image (48%)) and a cancel control that is configured to terminate the current image generation action. After the progress of image generation reaches 100%, a plurality of candidate images and a "try-alternatives" control are displayed in the conversation window of a user interface 46. The "try-alternatives" control is configured to, in response to being triggered, regenerate a target image based on current requirement information.

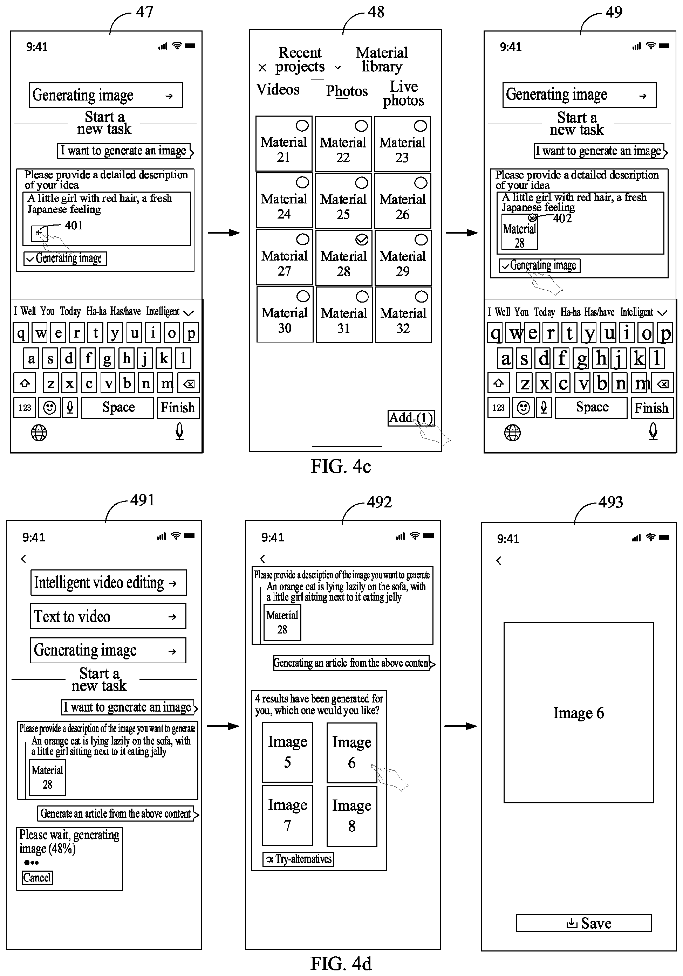

Referring to FIG. 4c, the application receives a trigger operation (such as a click operation or a touch-and-hold operation) performed on the "generating image" control 401 in a user interface 47, and jumping to the material import page in response to the trigger operation performed on the "generating image" control. A user interface 48 is the material import page, and the user interface 48 includes primary directories such as recent projects and material library. Under the recent projects, there are secondary directories such as videos, photos, and live photos displayed. After an image is selected, a plurality of image materials such as a material 21 to a material 32 are displayed. The user interface 48 further includes an add control (which is configured to, in response to being triggered, confirm the selected image material). After the user selects a material 8 and a material 9, the application jumps to the conversation interface, that is, the first interface, in response to a trigger operation performed on the add control by the user. System conversation information is displayed in the user interface 49. The system conversation information includes a filled slot (filled with a material 28 added in the material import page), and certainly may further be provided with a slot to be filled (not shown) that is configured to, in response to being triggered, add a new material (for example, after the slot to be filled is triggered, the material import page shown in the user interface 48 may be displayed to add a new material). The filled slot may be provided with a delete control 402, so that the application, after receiving a trigger operation performed on the delete control 402, may delete a corresponding material in response to the trigger operation. The application receives the trigger operation performed on the "generating image" control by the user.

Referring to FIG. 4d, in response to the trigger operation performed on the "generating image" control, the user conversation information "Generating an image using the above content" and a system conversation message are displayed in a user interface 491. The system conversation message includes progress information and a cancel control that is configured to, in response to being triggered, cancel the current generation. Upon 100% completion of the progress, a system conversation message is displayed in a user interface 492. The system conversation message includes trigger controls of a plurality of candidate images, images 5 to 6, to allow the user to select the target media content therefrom. The system conversation message further includes a "try-alternatives" operation control. The "try-alternatives" operation control is configured to regenerate a plurality of candidate videos based on the requirement information related to the previous conversation content. The application receives a trigger operation (such as a click operation or a touch-and-hold operation) performed on the image 6 in the user interface 492, and jumps to an image preview page, that is, a user interface 493, in response to the trigger operation performed on the image 6. In the user interface 493, the image 6 is enlarged and displayed. The user interface 493 further includes a save control that is configured to, in response to being triggered, save the image 6.

It should be noted that the embodiments shown in FIGs. 4a to 4d are only examples of the media content generation method according to the embodiments of the present disclosure. In practical scenarios, the display mode and the form of displaying the conversation content, the setting mode of related controls, as well as the layout of some pages, display parameters, and the implementations of controls and entries may be flexibly set according to requirements.

In an embodiment of the present disclosure, in order to facilitate a user in need to quickly find an entry control of the first interface, considering that the user searching for content such as materials and templates through a search box likely has a demand for the content generation method provided by the present solution, and therefore, the entry control for the first interface may be provided in a search related position. Specifically, before displaying the conversation content in the conversation window of the first interface, the method may further include: displaying the first interface in response to an action on a first entry control in a second interface, where the second interface shows a search box; and the first entry control is located in a surrounding area of the search box, where the search box is configured to input search information to search for and obtain a media content template matching the search information, and the search information is used to indicate the creation intent of the user for the media content.

Further, the entry control for the first interface may also be provided in a search result page, so that the user may find and attempt to enter the first interface in time for intelligent creation. Specifically, before displaying the conversation content in the conversation window of the first interface, the method may further include: displaying the first interface in response to an action on a second entry control in a search result interface, where the search result interface is triggered to be displayed in response to a search operation acting on the search box, the search result interface displays a search result display area; and the second entry control is provided in a surrounding area of the search result display area.

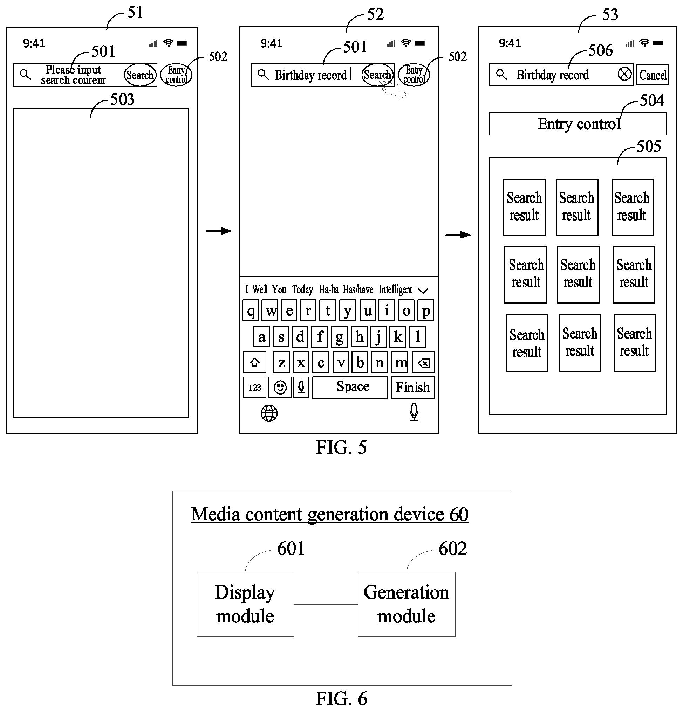

For example, an exemplary description of the position where the entry control for the first interface is provided is given below with reference to FIG. 5.

After the application is launched, a user interface 51 shown in FIG. 5 may be displayed on a mobile phone, where the user interface 51 is a main page of the application (that is, the second interface). The main page includes a search box 501, an entry control 502 for the first interface, and a display area 503. The display area 503 is mainly used to display various functional controls (such as edit, local draft, shoot, screen record, create a course, message, and personal settings) and various theme columns (such as industry templates, life challenges, and ranking list). The entry control 502 is provided on the right side of the search box 501, and the entry control 502 is configured to, in response to being triggered, enter the first interface.

The application receives a trigger operation (such as a click operation or a touch-and-hold operation) performed on the search box 501, and in response to the trigger operation on the search box, a keyboard control is invoked in a user interface 52. The application receives a trigger operation (such as a click operation or a touch-and-hold operation) performed on the keyboard control and displays input search content "Birthday record" in the search box 501 in response to the trigger operation performed on the keyboard control. The application receives a trigger operation (such as a click operation or a touch-and-hold operation) performed on a search control in the search box 501 and jumps to the search result page, that is, a user interface 53, in response to the trigger operation performed on the search control. The user interface 53 includes a search box 506, an entry control 504, and a search result display area 505. The entry control 504 is configured to, in response to being triggered, enter the first interface.

In an embodiment of the present disclosure, in order to communicate value to the user and increase the click-through rate, a guidance bubble may be provided near the entry control 502 when the user enters the user interface 51 as shown in FIG. 5, and a copy of the guidance bubble may be "AI makes video creation easier".

It should be noted that the embodiment shown in FIG. 5 is only an example of the information reply method according to the present disclosure. In practical scenarios, the layout of some pages, display parameters, and the implementations of controls and entries may be flexibly set according to requirements.

Corresponding to the media content generation method in the above embodiment, FIG. 6 is a structural block diagram of a media content generation apparatus according to an embodiment of the present disclosure. For ease of illustration, only parts related to the embodiment of the present disclosure are shown. Referring to FIG. 6, the apparatus includes: a display module 601 and a generation module 602.

The display module 601 is configured to display conversation content in a conversation window of a first interface, where the conversation content is used to indicate a creation intent of a user for media content;

The generation module 602 is configured to generate target media content based on the conversation content.

The display module 601 is further configured to display a trigger control for the target media content in the conversation window, where the trigger control is at least configured to trigger showing of the target media content.

In an embodiment of the present disclosure, the display module 601 is further configured to: display a target functional control in the first interface; and generate, in response to a touch operation acting on the target functional control, the first user conversation information corresponding to the target functional control.

In an embodiment of the present disclosure, the display module 601 is further configured to: obtain the second user conversation information in response to an input operation acting on the conversation input area.

In an embodiment of the present disclosure, the target media content is a video draft. The video draft includes a video material and editing information. The editing information is used to indicate an edit operation performed on the video material.

In an embodiment of the present disclosure, the display module 601 is specifically configured to: obtain a preview frame image at a target timeline position in the video draft and determine the preview frame image as a video cover; and display the video cover in the conversation window, where the video cover is used to displaying an editing effect of the video draft in response to being triggered.

In an embodiment of the present disclosure, the display module 601 is further configured to: jump, in response to a touch operation acting on the trigger control, to a preview playback interface, sequentially render editing effect frame images of the video draft, and display the rendered editing effect frame images on the preview playback interface.

In an embodiment of the present disclosure, the trigger control includes an export control. The display module 601 is further configured to: generate, in response to a touch operation acting on the export control, a target video based on the video draft.

In an embodiment of the present disclosure, the generation module 602 is specifically configured to: obtain first requirement information input by the user based on the conversation content, where the first requirement information is used to indicate a content requirement for the media content; determine a plurality of candidate video drafts based on the first requirement information, where the candidate video drafts each includes a video draft template and a target material, and the video draft template includes an edit operation performed on the target material; and select a video draft from the plurality of candidate video drafts.

In an embodiment of the present disclosure, the first requirement information includes a first text requirement and/or a first video material selected by the user. The display module 601 is specifically configured to: display first system conversation information in the conversation window of the first interface, where the first system conversation information showing a material import control and/or a first input box, the material import control is configured to obtain the first video material selected by the user, and the first input box is configured to obtain the first text requirement input by the user.

In an embodiment of the present disclosure, the display module 601 is further configured to: when the first system conversation information displays the material import control, display a material selection interface in the conversation window in response to an action on the material import control; and obtain, in response to a selection instruction of the user in the material selection interface, the first video material selected by the user.

In an embodiment of the present disclosure, the display module 601 is specifically configured to: obtain a second video material selected by the user; display a slot to be filled and a filled slot filled with the second video material in the conversation window, where the slot to be filled is configured to be filled with a video material subsequently selected by the user in response to being triggered, and a new filled slot is formed and displayed; and obtain the first video material selected by the user based on the video material filled in the filled slot.

In an embodiment of the present disclosure, the filled slot includes a delete control configured to delete the corresponding filled slot corresponding to the delete control in response to being triggered.

In an embodiment of the present disclosure, the generation module 602 is specifically configured to: determine a target copy based on the conversation content; segment the target copy into a plurality of copy statements; determine, for each copy statement, a video material and an audio clip corresponding to the copy statement, where the video material is obtained based on semantic matching of the copy statement; and the audio clip is obtained by converting the copy statement based on text-to-speech technology; and generate the video draft based on video materials and audio clips respectively corresponding to the plurality of copy statements, where the video materials and the audio clips all are independently editable.

In an embodiment of the present disclosure, the generation module 602 is specifically configured to: determine second requirement information based on the conversation content, and determine the target copy based on the second requirement information, where the second requirement information is used to indicate a content requirement for the copy.

In an embodiment of the present disclosure, the display module 601 is specifically configured to: display second system conversation information in the conversation window of the first interface, where the second system conversation information displays a second input box, and the second input box displays a first copy generated based on the second requirement information; edit the first copy to obtain a second copy in response to an action on an edit control of the second input box; or, switch the first copy to obtain a third copy in response to an action on a switch control of the second input box.

In an embodiment of the present disclosure, the generation module 602 is specifically configured to: determine third requirement information based on the conversation content, wherein the third requirement information includes a second text requirement and/or a reference image, and the second text requirement is used to indicate a content requirement for the media content; and determine a target image based on the third requirement information, and determine the target image as the target media content.

In an embodiment of the present disclosure, the display module 601 is further configured to: display the first interface in response to an action on a first entry control in a second interface, where the second interface shows a search box; and the first entry control is located in a surrounding area of the search box, where the search box is configured to input search information to search for and obtain a media content template matching the search information, and the search information is used to indicate the creation intent of the user for the media content.

In an embodiment of the present disclosure, the display module 601 is further configured to: display the first interface in response to an action on a second entry control in a search result interface, where the search result interface is triggered to be displayed in response to a search operation acting on the search box, the search result interface displays a search result display area; and the second entry control is provided in a surrounding area of the search result display area.

The device provided in this embodiment may be configured to perform the technical solution of the above method embodiment. The implementation principle and technical effects thereof are similar, and are not described herein again in this embodiment.

In order to implement the above-mentioned embodiments, an embodiment of the present disclosure further provides an electronic device.

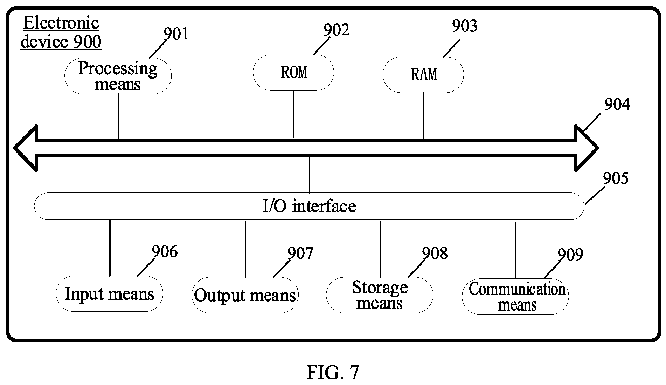

Reference is made to FIG. 7, which is a schematic structural diagram of an electronic device 900 suitable for implementing the embodiments of the present disclosure. The electronic device 900 may be a terminal device or a server. The terminal device may include, but is not limited to, a mobile terminal such as a mobile phone, a notebook computer, a digital broadcast receiver, a personal digital assistant (PDA), a tablet computer (portable Android device, PAD), a portable media player (PMP), and a vehicle-mounted terminal (such as a vehicle navigation terminal), and a fixed terminal such as a digital TV and a desktop computer. The electronic device shown in FIG. 7 is merely an example, and shall not impose any limitation on the function and scope of use of the embodiments of the present disclosure.

As shown in FIG. 7, the electronic device 900 may include a processing apparatus (for example, a central processing unit or a graphics processing unit) 901 that may perform a variety of appropriate actions and processing based on a program stored in a read-only memory (ROM) 902 or a program loaded from a storage apparatus 908 into a random access memory (RAM) 903. The RAM 903 further has various programs and data required for the operation of the electronic device 900 stored therein. The processing apparatus 901, the ROM 902, and the RAM 903 are connected to one another through a bus 904. An input/output (I/O) interface 905 is also connected to the bus 904.

Generally, the following apparatus may be connected to the I/O interface 905: an input apparatus 906 including, for example, a touchscreen, a touchpad, a keyboard, a mouse, a camera, a microphone, an accelerometer, and a gyroscope; an output apparatus 907 including, for example, a liquid crystal display (LCD), a speaker, and a vibrator; the storage apparatus 908 including, for example, a magnetic tape and a hard disk drive; and a communication apparatus 909. The communication apparatus 909 may allow the electronic device 900 to perform wireless or wired communication with other devices to exchange data. Although FIG. 7 shows the electronic device 900 having various apparatus, it should be understood that it is not required to implement or have all of the shown apparatus. It may be an alternative to implement or have more or fewer apparatus.

In particular, according to the embodiments of the present disclosure, the process described above with reference to the flowchart may be implemented as a computer software program. For example, an embodiment of the present disclosure includes a computer program product, which includes a computer program carried on a computer-readable medium, where the computer program includes program code for performing the method shown in the flowchart. In such an embodiment, the computer program may be downloaded and installed from a network through the communication apparatus 909, installed from the storage apparatus 908, or installed from the ROM 902. When the computer program is executed by the processing apparatus 901, the above-mentioned functions defined in the method of the embodiments of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

The above-mentioned computer-readable medium may be included in the above-mentioned electronic device. Alternatively, the computer-readable medium may exist independently, without being assembled into the electronic device.

The above-mentioned computer-readable medium carries one or more programs that, when executed by the electronic device, cause the electronic device to perform the method shown in the above-mentioned embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. A media content generation method, comprising:
displaying conversation content in a conversation window of a first interface, wherein the conversation content is used to indicate a creation intent of a user for media content;
generating target media content based on the conversation content; and
displaying a trigger control of the target media content in the conversation window, wherein the trigger control is at least configured to trigger displaying of the target media content.

2. The method according to claim 1, wherein the conversation content comprises first user conversation information, and the method further comprises:
displaying a target functional control in the first interface; and
generating, in response to a touch operation acting on the target functional control, the first user conversation information corresponding to the target functional control.

3. The method according to claim 1 or 2, wherein the conversation content comprises second user conversation information, the first interface comprises a conversation input area, and the method further comprises:
obtaining the second user conversation information in response to an input operation acting on the conversation input area.

4. The method according to any one of claims 1 to 3, wherein the target media content is a video draft, the video draft comprising a video material and editing information, and the editing information is used to indicate an edit operation performed on the video material.

5. The method according to claim 4, wherein displaying the trigger control of the target media content in the conversation window comprises:
obtaining a preview frame image at a target timeline position in the video draft and determining the preview frame image as a video cover; and
displaying the video cover in the conversation window, wherein the video cover is used to displaying an editing effect of the video draft in response to being triggered.

6. The method according to claim 4 or 5, wherein after displaying the trigger control of the target media content in the conversation window, the method further comprises:
jumping, in response to a touch operation acting on the trigger control, to a preview playback interface, sequentially rendering editing effect frame images of the video draft, and displaying the rendered editing effect frame images on the preview playback interface.

7. The method according to any one of claims 4 to 6, wherein the trigger control comprises an export control; and
after displaying the trigger control of the target media content in the conversation window, the method further comprises: generating, in response to a touch operation acting on the export control, a target video based on the video draft.

8. The method according to any one of claims 4 to 7, wherein generating the target media content based on the conversation content comprises:
obtaining first requirement information input by the user based on the conversation content, wherein the first requirement information is used to indicate a content requirement of the media content;
determining a plurality of candidate video drafts based on the first requirement information, wherein the candidate video draft comprises a video draft template and a target material, and the video draft template comprises an edit operation performed on the target material; and
selecting a video draft from the plurality of candidate video drafts.

9. The method according to claim 8, wherein the first requirement information comprises a first text requirement and/or a first video material selected by the user; and displaying the conversation content in the conversation window of the first interface comprises:
displaying first system conversation information in the conversation window of the first interface, wherein the first system conversation information displays a material import control and/or a first input box, the material import control is configured to obtain the first video material selected by the user, and the first input box is configured to obtain the first text requirement input by the user.

10. The method according to claim 9, wherein displaying the conversation content in the conversation window of the first interface further comprises:
when the first system conversation information displays the material import control, displaying a material selection interface in the conversation window in response to an action on the material import control; and
obtaining, in response to a selection instruction of the user in the material selection interface, the first video material selected by the user.

11. The method according to claim 10, wherein obtaining the first video material selected by the user comprises:
obtaining a second video material selected by the user;
displaying a slot to be filled and a filled slot filled with the second video material in the conversation window, wherein the slot to be filled is configured to be filled with a video material subsequently selected by the user in response to being triggered, and a new filled slot is formed and displayed; and
obtaining the first video material selected by the user based on the video material filled in the filled slot.

12. The method according to claim 11, wherein the filled slot comprises a delete control, and the delete control is configured to delete the filled slot corresponding to the delete control in response to being triggered.

13. The method according to any one of claims 4 to 12, wherein generating the target media content based on the conversation content comprises:
determining a target copy based on the conversation content;
segmenting the target copy into a plurality of copy statements;
determining, for each copy statement, a video material and an audio clip corresponding to the copy statement, wherein the video material is obtained based on semantic matching of the copy statement; and the audio clip is obtained by converting the copy statement based on text-to-speech technology; and
generating the video draft based on video materials and audio clips respectively corresponding to the plurality of copy statements, wherein the video materials and the audio clips all are independently editable.

14. The method according to claim 13, wherein determining the target copy based on the conversation content comprises:
determining second requirement information based on the conversation content, and determining the target copy based on the second requirement information, wherein the second requirement information is used to indicate a content requirement for the copy.

15. The method according to claim 14, wherein displaying the conversation content in the conversation window of the first interface comprises:
displaying second system conversation information in the conversation window of the first interface, wherein the second system conversation information displays a second input box, and the second input box displays a first copy generated based on the second requirement information;
editing the first copy to obtain a second copy in response to an action on an edit control of the second input box; or, switching the first copy to obtain a third copy in response to an action on a switch control of the second input box.

16. The method according to any one of claims 1 to 15, wherein generating the target media content based on the conversation content comprises:
determining third requirement information based on the conversation content, wherein the third requirement information comprises a second text requirement and/or a reference image, and the second text requirement is used to indicate a content requirement for the media content; and
determining a target image based on the third requirement information, and determining the target image as the target media content.

17. The method according to any one of claims 1 to 16, wherein before displaying the conversation content in the conversation window of the first interface, the method further comprises:
displaying the first interface in response to an action on a first entry control in a second interface, wherein the second interface shows a search box; and the first entry control is located in a surrounding area of the search box, wherein the search box is configured to input search information to search for and obtain a media content template matching the search information, and the search information is used to indicate the creation intent of the user for the media content.

18. The method according to claim 17, wherein before displaying the conversation content in the conversation window of the first interface, the method further comprises:
displaying the first interface in response to an action on a second entry control in a search result interface, wherein the search result interface is triggered to be displayed in response to a search operation acting on the search box; the search result interface displays a search result display area; and the second entry control is provided in a surrounding area of the search result display area.

19. A media content generation apparatus, comprising:
a display module, configured to display conversation content in a conversation window of a first interface, wherein the conversation content is used to indicate a creation intent of a user for media content;
a generation module, configured to generate target media content based on the conversation content; and
the display module, further configured to display a trigger control of the target media content in the conversation window, wherein the trigger control is at least configured to trigger showing of the target media content.

20. An electronic device, comprising: a processor and a memory, wherein
the memory stores computer-executable instructions, and
the processor executes the computer-executable instructions stored in the memory, to cause the processor to perform the media content generation method according to any one of claims 1 to 18.

21. A computer-readable storage medium, wherein the computer-readable storage medium stores computer-executable instructions, when the computer-executable instructions is executed by a processor, the media content generation method according to any one of claims 1 to 18 is implemented.

22. A computer program product, comprising a computer program, wherein when the computer program is executed by a processor, the media content generation method according to any one of claims 1 to 18 is implemented.
